# EUROPÄISCHE PATENTSCHRIFT

(11) **EP 1 986 760 B1**
(45) Veröffentlichungstag und Bekanntmachung des Hinweises auf die Patenterteilung: **13.04.2011**
(21) Anmeldenummer: 07711516.0
(22) Anmeldetag: 13.02.2007
(51) Int. Cl.: B01D 35/027, A47J 31/60, C02F 1/00

(54) **FILTERPATRONE ZUM EINSETZEN IN EINEN WASSERVORRATSTANK**
FILTER CARTRIDGE FOR USE IN A WATER STORAGE TANK
CARTOUCHE DE FILTRE DESTINEE A ETRE UTILISEE DANS UN RÉSERVOIR D'EAU

(30) Priorität: 14.02.2006 DE 102006006933
(43) Veröffentlichungstag der Anmeldung: 05.11.2008
(73) Patentinhaber: Aquis Wasser-Luft-Systeme GmbH, Lindau, 9445 Rebstein (CH)
(72) Erfinder: WAWRLA, Andreas, CH-9443 Widnau (CH)
(74) Vertreter: Roth, Klaus
(86) Internationale Anmeldenummer: PCT/EP2007/001208
(87) Internationale Veröffentlichungsnummer: WO 2007/093360

(56) Entgegenhaltungen:
- EP-A1- 1 340 442
- WO-A-2005/028073
- WO-A-2006/040120
- DE-A1- 2 357 585

## Beschreibung

Die vorliegende Erfindung betrifft eine Filterpatrone zum Einsetzen in einem Wasservorratstank sowie einen Wasservorratstank und eine Getränkemaschine gemäß der Oberbegriffe der Ansprüche 1 und 6.

Filterpatronen zum Einsetzen in einen Wasservorratstank einer Getränkemaschine, wie einer Espressomaschine oder dergleichen sind in der Regel mit einem Gehäuse ausgestattet, in dem ein aus Filtermaterial gebildetes Filterbett angeordnet ist. Derartige Filterpatronen sind beispielsweise aus der Druckschrift DE 197 17 054 bekannt.

Für den Anschluss der Filterpatrone an einem Anschlusselement des Wasservorratstanks wird in dieser Druckschrift die Verwendung eines Adapterteils beschrieben. Auf diese Weise kann die Filterpatrone mit Hilfe entsprechender Adapterteile an alle gängigen Formen eines Wasservorratstanks angepasst werden. Über die genaue Ausgestaltung eines solchen Adapters ist dieser Druckschrift jedoch kein Hinweis zu entnehmen.

Aufgabe der Erfindung ist es daher, ausgehend von einer Druckschrift der einleitend genannten Art, eine Filterpatrone vorzuschlagen, bei der alle Anschlüsse mit Hilfe eines Adapterteils realisierbar sind.

Diese Aufgabe wird ausgehend von einer Filterpatrone gemäß dem Oberbegriff des Anspruchs 1 sowie einem Wasservorratstank und einer Getränkemaschine nach dem Oberbegriff des Anspruchs 6 durch deren kennzeichnende Merkmale gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Filterpatrone durch ein austauschbares Adapterteil aus, das eine mit dem Wasservorratstank in Verbindung stehende Steigleitung zur Aufnahme des Wassers aus dem Wasservorratstank und zur Weiterleitung in die Filterpatrone aufweist.

Ein derart ausgestaltetes Adapterteil ermöglicht somit nicht nur die ausgangsseitige Anpassung einer Filterpatrone an alle gängigen Anschlusselemente von Wasservorratstanks durch entsprechenden Austausch des Adapterteils, sondern es stellt zugleich auch die Wasserzufuhr in die Filterpatrone sicher. Auf diese Weise ist eine separate, entsprechend tief angeordnete Wassereintrittsöffnung bei der Filterpatrone entbehrlich. Außerdem ist eine Entleerung des Wasservorratstanks bis auf Höhe der Wassereintrittsöffnung im Adapterteil möglich. Insbesondere kann die Filterpatrone auch in einer der Länge des Adapterteils entsprechenden Höhe oberhalb des Tankbodens angeordnet werden, wobei die Wasserzufuhr über den Adapter gewährleistet ist.

Vorteilhafterweise umfasst die Filterpatrone weiterhin eine mit der Steigleitung des Adapterteils verbindbare Steigleitung, die oberhalb des Filterbettes in der Filterpatrone ausmündet. In dieser Bauform ist die Durchströmung des gesamten Filterbettes im sogenannte Abstromverfahren von oben nach unten möglich, d. h. das gesamte Filterbett wird hierbei unter Zuhilfenahme der Gravitation durchströmt.

Die oberhalb des Filterbettes in der Filterpatrone ausmündende Steigleitung kann dabei in die Filterpatrone bzw. in derer Gehäuse integriert werden, sodass sie vollständig im Innern der Patrone verläuft, oder aber auch außerhalb der Patrone als separate Leitung angeordnet werden. Vorzugsweise wird das Adapterteil mit einer Dichtung versehen, die für den dichten Abschluss der Auslassleitung am bzw. im Anschlusselement des Wasservorratstanks sorgt. Ein solcher dichter Abschluss stellt sicher, dass ausschließlich gefiltertes Wasser die Ausgangsöffnung des Wasservorratstanks erreicht und nicht etwa ungefiltertes Wasser beigemischt wird.

Eine solche Dichtung wird vorteilhafterweise durch eine Axialdichtung für den dichten Abschluss der Auslassleitung des Adapterteils am Behälterboden gebildet. Eine solche Axialdichtung bietet eine einfache Handhabung, da durch axiales Andrücken der Dichtung am Behälterboden der erforderliche dichte Formschluss erzielt wird. Reibungskräfte, die beispielsweise beim Anpressen einer Radialdichtung an einen entsprechend geformten radialen Dichtsitz auftreten können, sind hierbei vermieden.

Darüber hinaus ist mit Hilfe einer Axialdichtung problemlos eine definierte Betriebsposition der Filterpatrone bzw. des Adapterteils gegebenenfalls unter Zuhilfenahme eines Anschlags möglich.

In einer Weiterbildung einer erfindungsgemäßen Filterpatrone wird im Filterbett wenigstens ein in Betrieb von oben nach unten durchströmter Strömungsbereich vorgesehen. Das Filterbett kann in diesen Bereichen demnach unter Zuhilfenahme der Gravitation durchströmt werden, sodass der Strömungswiderstand des Filterbettes wenigstens teilweise kompensiert wird.

Eine erfindungsgemäße Filterpatrone wird bevorzugt in einem Wasservorratstank eingesetzt, der ein Rückschlagventil aufweist, sodass der Wasservorratstank aus der entsprechenden Getränkemaschine entnehmbar ist, ohne dass Wasser durch dessen Bodenöffnung austreten kann. Der Wasservorratstank kann somit zum Befüllen aus der Maschine entnommen werden.

Die entsprechende Getränkemaschine wird wiederum vorteilhafterweise mit einer Saugpumpe versehen, um die zuverlässige Durchströmung der Filterpatrone und somit die zuverlässige Entnahme der gewünschten Wassermenge für die Getränkemaschine sicherzustellen.

Im Falle einer Durchströmung des Filterbetts im Abstrom wird, wie oben angeführt, der Strömungswiderstand des Filterbettes durch die Gravitation wenigstens teilweise kompensiert, sodass die Saugpumpe weniger groß dimensioniert werden muss.

Ein Ausführungsbeispiel der Erfindung ist in der Zeichnung dargestellt und wird anhand der Figur nachfolgend näher erläutert.

Im Einzelnen zeigen
- Figur 1: eine schematische Schnittdarstellung einer ersten Ausführungsform der Erfindung und,
- Figur 2: eine schematische Schnittdarstellung einer zweiten Ausführungsform.

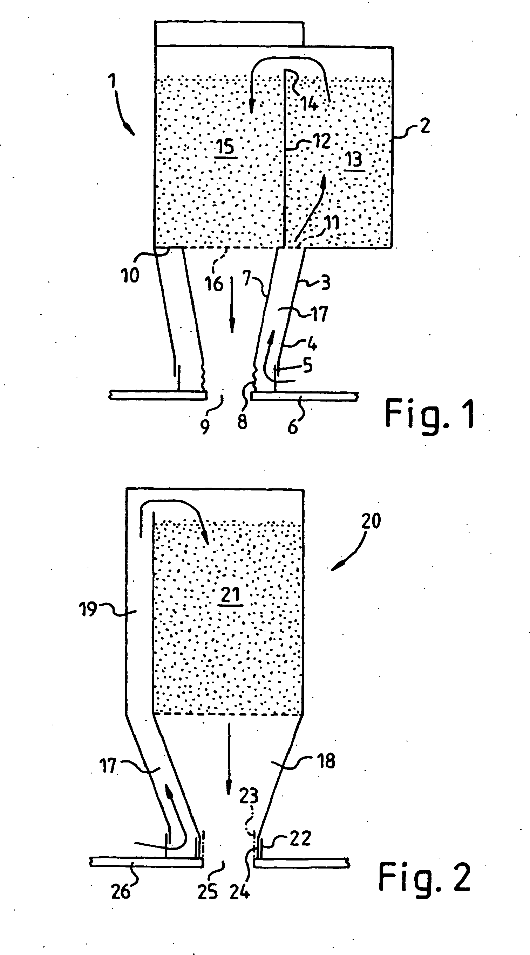

In Figur 1 ist eine Filterpatrone 1 mit Filtergehäuse 2 und erfindungsgemäßem Adapterteil 3 dargestellt. Das Adapterteil 3 ist auf nicht näher dargestellte Weise, beispielsweise durch einen Klipsverschluss mit einem Filtergehäuse 2 verbindbar.

Das Adapterteil 3 ist in Form eines Doppelrohrs ausgebildet, wobei die Wandung des Außenrohrs 4 in der dargestellten Ausführungsform einen bodenseitigen Anschlusssockel 5 eines Wasservorratstanks umschließt, von dem vorliegend nur der Tankboden 6 dargestellt ist. Zentral im Innern des Außenrohres 4 ist ein Innenrohr 7 mit einer bodenseitigen Axialdichtung in Form eines Dichtbalgs angebracht. Das Innenrohr 7 mündet bodenseitig in eine Auslassöffnung 9 des Tankbodens 6. An der Oberseite ist das Adapterteil 3 mit einem Deckel 10 verschlossen, der eine Durchgangsöffnung 11 in eine durch eine Trennwand 12 im Filtergehäuse 2 gebildete Einlasskammer 13 aufweist. Die Durchgangsöffnung 11 ist im Bereich des Zwischenraums zwischen dem Innenrohr 7 und dem Außenrohr 4 angeordnet.

Die Trennwand 12 bildet an ihrem oberen Ende einen Überlauf 14 in die Auslasskammer 15, die bodenseitig mit einer Durchgangsöffnung 16 mit dem Innenrohr 7 in Verbindung steht.

Die Strömungsrichtung des Adapters ist durch Pfeile dargestellt. Im Bodenbereich kann das Wasser über eine entsprechende Durchgangsöffnung im Außenrohr 4, die beispielsweise in Form von Längsschlitzen (nicht näher dargestellt) oder durch einen einfachen Abstand des Außenrohrs 4 zum Boden 6 vorliegen kann. Der Anschlusssockel 5 ist zu diesem Zweck ebenfalls mit Öffnungen, beispielsweise mit Schlitzen in axialer Richtung versehen (ebenfalls nicht dargestellt), sodass das Wasser ungehindert in den Zwischenraum zwischen dem Außenrohr 4 und den Innenrohr 7 strömen kann.

Dieser Zwischenraum bildet eine Steigleitung 17, über die das Wasser in die Einlasskammer 13 gelangt. Über den Überlauf 14 gelangt das Wasser in die Auslasskammer 15 und somit in das Innenrohr 7, über das es durch die Auslassöffnung 9 des Behälterbodens 6 abfließen kann. Die Einlasskammer 13 sowie die Auslasskammer 15 sind im vorliegenden Ausführungsbeispiel mit Filtermaterial, beispielsweise Ionentauscherharz und/oder Aktivkohle oder dergleichen gefüllt. In dieser Ausführungsform bildet die Auslasskammer 15 einen Strömungsbereich, der im Abstrom, d. h. von oben nach unten durchströmt wird und somit den Strömungswiderstands des Filterbettes wenigstens teilweise kompensiert und somit den Strömungswiderstand des Filterbettes wenigstens teilweise kompensiert.

Die Ausführungsvariante gemäß Figur 2 entspricht im Wesentlichen dem erstgenannten Ausführungsbeispiel, wobei die Steigleitung 17 nunmehr seitlich neben dem Auslassrohr 18 angeordnet und mit einer Steigleitung 19 der Filterpatrone 20 verbunden ist. über die Steigleitung 19 gelangt das Wasser von oben in das Filterbett 21, das infolgedessen vollständig im Abstrom durchströmt wird. Bei dieser Ausführungsform kann beispielsweise ein außenumschließender Anschlusssockel 22 im Behälterboden vorgesehen werden. Alternativ oder in Kombination hierzu kann auch ein nach innen in das Auslassrohr 18 hineinstehender Anschlusssockel 23 vorgesehen werden. Über ein Dichtelement 24, das beispielsweise ebenso wie im Ausführungsbeispiel gemäß Figur 1 als Axialdichtung 8 ausgelegt sein kann, wird das Auslassrohr 18 gegenüber der Außenumgebung abgedichtet, sodass lediglich gefiltertes Wasser in die Austrittsöffnung 25 des Tankbodens 26 gelangen kann.

### Bezugszeichenliste:

- 1: Filterpatrone
- 2: Filtergehäuse
- 3: Adapterteil
- 4: Außenrohr
- 5: Anschlusssockel
- 6: Tankboden
- 7: Innenrohr
- 8: Axialdichtung
- 9: Anschlussöffnung
- 10: Deckel
- 11: Durchgangsöffnung
- 12: Trennwand
- 13: Einlaßkammer
- 14: Überlauf
- 15: Auslasskammer
- 16: Durchgangsöffnung
- 17: Steigleitung
- 18: Auslassrohr
- 19: Steigleitung
- 20: Filterpatrone
- 21: Filterbett
- 22: Anschlusssockel
- 23: Anschlusssockel
- 24: Dichtelement
- 25: Auslassöffnung
- 26: Tankboden

## Patentansprüche

1. Filterpatrone zum Einsetzen in einen Wasservorratstank einer Getränkemaschine, wie eine Espressomaschine oder dergleichen, mit einem Gehäuse, in dem ein aus Filtermaterial gebildetes Filterbett angeordnet ist, und mit einem Adapterteil zum Anschluss des Auslasses der Filterpatrone an ein Anschlusselement des Wasservorratstanks, **dadurch gekennzeichnet, dass** das Adapterteil austauschbar ausgebildet ist und eine mit dem Wasservorratstank in Verbindung stehende Steigleitung (17) zur Filterpatrone (1) zur Wasserzufuhr in die Eilterpazrone aus dem Wasservorratstank aufweiset.

2. Filterpatrone nach Anspruch 1 **dadurch gekennzeichnet, dass** die Filterpatrone eine mit der Steigleitung (17) des Adapterteils (3) verbindbare Steigleitung (19) umfasst, die oberhalb des Filterbettes in der Filterpatrone (1) ausmündet.

3. Filterpatrone nach einem der vorgenannten Ansprüche **dadurch gekennzeichnet, dass** das Adapterteil (3) eine Dichtung (8) zum dichten Abschluss der Auslassleitung mit dem Anschlusselement des Wasservorratstanks aufweist.

4. Filterpatrone nach einem der vorgenannten Ansprüche **dadurch gekennzeichnet, dass** die Dichtung des Adapterteils als Axialdichtung (8) für den dichten Abschluss mit dem Behälterboden ausgebildet ist.

5. Filterpatrone nach einem der vorgenannten Ansprüche **dadurch gekennzeichnet, dass** im Filterbett wenigstens ein im Betrieb von oben nach unten durchströmter Strömungsbereich vorgesehen ist.

6. Wasservorratstank und Getränkemaschine, wie eine Espressomaschine oder dergleichen, **dadurch gekennzeichnet, dass** eine Filterpatrone gemäß einem der Ansprüche 1 bis 5 im Wasservorratstank eingesetzt ist.

7. Wasservorratstank und Getränkemaschine nach Anspruch 6, **dadurch gekennzeichnet, dass** eine Saugpumpe zum Ansaugen von Wasser aus dem Wasservorratstank über die Filterpatrone vorgesehen ist.

## Claims

1. Filter cartridge for use in a water storage tank of a drinks machine, such as an espresso machine or the like, with a housing, in which a filter bed in the form of a filter material is arranged, and with an adapter part for connecting the outlet of the filter cartridge to a connection element of the water storage tank, **characterised in that** the adapter part is designed to be exchangeable and comprises a riser line (17), which is in connection with the water storage tank, to the filter cartridge (1) for the supply of water into the filter cartridge from the water storage tank.

2. Filter cartridge according to claim 1, **characterised in that** the filter cartridge comprises a riser line (19) connectable with the riser line (17) of the adapter part (3), which riser line (19) opens above the filter bed in the filter cartridge (1).

3. Filter cartridge according to one of the preceding claims, **characterised in that** the adapter part (3) comprises a seal (8) for sealing between the outlet line and the connection element of the water storage tank.

4. Filter cartridge according to one of the preceding claims, **characterised in that** the seal of the adapter part is designed as an axial seal (8) for forming a sealed connection with the container base.

5. Filter cartridge according to one of the preceding claims, **characterised in that** in the filter bed at least one flow section is provided which is flowed through during operation from top to bottom.

6. Water storage tank and drinks machine, such as an espresso machine or the like, **characterised in that** a filter cartridge according to one of claims 1 to 5 is used in the water storage tank.

7. Water storage tank and drinks machine according to claim 6, **characterised in that** a suction pump is provided for suctioning water from the water storage tank via the filter cartridge.

## Revendications

1. Cartouche de filtre destinée à être installée dans un réservoir d'eau d'une machine distributrice de boissons, telle qu'une machine expresso ou machine analogue comportant un boîtier dans lequel est logé un lit filtrant constitué d'une matière filtrante et ayant une pièce adaptatrice pour relier la sortie de la cartouche de filtre à un élément de raccordement du réservoir d'eau,
cartouche **caractérisée en ce que**
la pièce adaptatrice est remplaçable et comporte une conduite montante (17) communiquant avec le réservoir d'eau vers la cartouche de filtre (1) pour fournir l'eau à la cartouche de filtre à partir du réservoir d'eau.

2. Cartouche de filtre selon la revendication 1,
**caractérisée en ce qu'**
elle comporte une conduite montante (19) qui peut être reliée à la conduite montante (17) de la pièce adaptatrice (3) et débouche dans la cartouche de filtre (1) au-dessus du lit filtrant.

3. Cartouche de filtre selon l'une des revendications précédentes,
**caractérisée en ce que**
la pièce adaptatrice (3) comporte un joint (8) pour assurer l'étanchéité de la fermeture de la conduite de sortie avec l'élément de raccordement du réservoir d'eau.

4. Cartouche de filtre selon l'une des revendications précédentes,
**caractérisée en ce que**
le joint de la pièce adaptatrice est réalisé comme joint axial (8) pour le branchement étanche avec le fond du réservoir.

5. Cartouche de filtre selon l'une des revendications précédentes,
**caractérisée en ce que**
le lit filtrant comporte au moins une zone d'écoulement traversée de haut en bas en fonctionnement.

6. Réservoir d'eau et machine distributrice de boissons telle qu'une machine expresso ou analogue,
**caractérisé par**
une cartouche de filtre selon l'une des revendications 1 à 5 logée dans le réservoir d'eau.

7. Réservoir d'eau et machine distributrice de boissons selon la revendication 6,
**caractérisé par**
une pompe aspirante pour aspirer l'eau du réservoir d'eau à travers la cartouche de filtre.
